# EUROPEAN PATENT APPLICATION

(11) **EP 0 947 716 A2**
(43) Date of publication of application: **06.10.1999**
(21) Application number: 99302206.0
(22) Date of filing: 22.03.1999
(51) Int. Cl.: F16B 35/04

(54) **Fastener system with cross-slot recess and cross-slot bit**

(30) Priority: 03.04.1998 US 55065
(71) Applicant: Fairchild Holding Corp., Torrance, California 90505 (US)
(72) Inventor: Dewan, Stanley H., Yorba Linda, California 92886 (US); Yamomoto, Albert K., Huntington Beach, California 92646 (US)
(74) Representative: Enskat, Michael Antony Frank

(57) **Abstract**

An improved fastener system includes a threaded pin (12) and a bit (16). The pin contains a recess (39) in a threaded end of the pin for receiving the bit (16), thus holding the pin (12) against rotation during application of a nut (14) on the pin (12). In one embodiment, the recess (39) includes a pair of substantially perpendicular intersecting slots (40) extending completely across an end face of the threaded end of the pin (12), with an aperture located at the intersection of the slots (40). A plurality of splines (26) are located on an end of the bit (16) for engaging the slots of the recess. The splines (26) are oriented on the bit (16) to mirror the configuration of the recess (39). Additionally, a pilot (28) extends from the splines (26) on the end of the bit (16) for engaging the aperture of the recess (39) and centering the bit (16) during use.

## Description

The present invention relates generally to fastener systems, and more particularly, to a fastener system comprising a threaded fastener having a cross-slot recess for receiving a mating bit during application of a nut on the fastener.

Threaded fasteners typically consist of a nut and a bolt. The nut has an internal thread that screws onto an external thread of the bolt. Wrenching surfaces on the nut and/or bolt accept wrenches that tightly join the fasteners and one or more workpieces together. The fastener secures workpieces together to form a joint by compressive engagement between the nut on one side of the workpiece, and the head of the bolt on the opposite side.

U.S. Patent No. 4,260,005 describes a particular type of threaded fastener having a self-locking nut that uses external lobes to accept a driver having a generally triangular or deltoid shaped socket to tighten the nut on a cooperating pin. The teachings of this patent necessary for an understanding of the present invention are incorporated herein by this reference. The nut is preferably used with a pin having a plurality of grooves or flutes extending longitudinally along the pin. Once a predetermined axial load exists in the joint being made, the lobes plastically deform and the driver can no longer turn the nut. Deformation of the lobes displaces material positioned radially inward from them into the flutes of the cooperating pin to produce a mechanical thread lock. The thread lock results from material deforming into and across the pin flutes.

There are numerous applications where it is advantageous to provide a fastener which may be held against rotation from its leading edge while a nut is torqued upon the pin. For example, as is often the case in the aerospace industry, there are many requirements for "blind" bolt applications, where the head of the bolt cannot be conveniently reached, or is perhaps altogether unreachable. For these applications, a holding bit is often provided with the driver. The bit engages a recess in the threaded end of the pin to facilitate application of the nut by the driver. The bit remains stationary, thus holding the pin against rotation, while the driver turns to torque the nut. U.S. Patent Nos. 4,583,483 and 5,044,225 describe the use of such a bit in connection with power tools developed for the rapid installation of fasteners.

Generally, a hexagonal recess is provided in the threaded end of bolts for receiving a matching hexagonal bit. Existing hexagonal bits, however, have experienced unacceptable failure rates when used during installation of bolts in certain wet-sealant applications. In these applications, sealant often surrounds the head of the bolt and is present between the bolt and the workpiece. As a result, all of the torque required to apply the nut to the pin is transferred directly to the bit, rather than being partially absorbed by the friction normally present between the head of the bolt and the workpiece. When the above induced torque exceeds the strength of the hexagonal bit, application of the nut becomes impossible.

Initial attempts at solving this problem included varying the cross-section and material of the hexagonal bit. However, these attempts have been largely unsuccessful. Consequently, a need exists for a torque reaction mechanism that exhibits higher strength than existing hexagonal bits. Additionally, a need exists for an improved fastener system that exhibits the increased strength required for wet-sealant applications.

The present invention, therefore, provides an improved fastener system that minimizes the disadvantages identified with respect to the prior art fastener systems described above. The fastener system according to the present invention generally includes a threaded pin having a recess in an end face on the threaded portion of the pin, for receiving a bit when a nut is torqued onto the pin. In a presently preferred embodiment, the recess comprises a plurality of slots extending completely across the end face, and an aperture. Additionally the bit comprises a plurality of splines extending from an end of the bit, and a pilot extending from the splines, configured to match the recess such that the bit may be received in the recess to prevent the pin from rotating when the nut is torqued onto the pin.

Preferably, the nut includes at least one external, axially extending lobe. As a result, when the nut is torqued onto the pin, some of the material positioned radially inward from the lobe is displaced into the void spaces formed by the ends of the slots extending completely across the end face of the pin. The slots, therefore, increases the backoff resistance of the fastener, providing an improved mechanical thread lock between the nut and the pin. Additionally, the pin preferably includes a plurality of flutes extending in an axial direction across the threaded portion of the pin, so that some of the material is also displaced into the flutes of the pin.

In a presently preferred embodiment, the recess is a cross-slot recess comprising a pair of intersecting slots, oriented substantially perpendicular to one another in the general shape of a cross, and the aperture is located at the intersection of the slots. To engage the recess during torquing of the nut onto the pin, the bit is formed as a cross-slot bit comprising a shaft with four splines extending from one end of the shaft in the general shape of a cross. The bit replaces the conventional hexagonal bit presently used with most fasteners to prevent the pin of the fastener from rotating during application of the nut. The cross-slot bit, however, displays superior strength to the conventional bit due to an increase in the moment arm of the resisting force. The cross-slot bit also includes a pilot for centering the tool on the pin during installation. The pilot protrudes from the end of the shaft at the center of the cross formed by the splines.

In an alternative embodiment, the recess in the threaded end of the pin comprises only a single slot formed completely across the threaded end of the pin. In this embodiment, the bit is configured according, with only two splines, to engage the single-slot recess during application of the nut.

Additionally, one of the advantages of the present invention is that it allows an existing inventory of fasteners with hexagonal recesses to be reworked to exhibit the higher strength of the fastener system described herein. Therefore, another embodiment of the present invention accommodates an existing inventory of fasteners designed to be used with hexagonal bits. In this embodiment, the existing hexagonal recess in the pin functions as the aperture, and a pair of cross slots may be milled completely across the end of the fastener to provide a recess for receiving the cross-slot bit provided for in this invention.

These and other features and advantages of the present invention will be appreciated as the same become better understood by reference to the following Detailed Description when considered in connection with the accompanying drawings, wherein:
FIG. 1 is an exploded perspective view of the fastener system of the present invention, with the fastener being shown prior to installation into a pair of sheets and the bit removed from the fastener;
FIG. 2 is a front elevation view of the fastener of FIG. 1;
FIG. 3 is a plan view of the threaded end of the pin of FIG. 2, wherein the pin includes a cross-slot recess;
FIG. 4 is a cross sectional view of the pin of FIG. 3 taken along line 3-3;
FIG. 5 is a perspective view of the bit of FIG. 1;
FIG. 6 is a plan view of the threaded end of a pin of an alternate embodiment of the fastener provided by the present invention, wherein the pin includes a single-slot recess;
FIG. 7 is a perspective view of the bit corresponding to the fastener of FIG. 6; and
FIG. 8 is a plan view of the threaded end of a pin of an another embodiment of the fastener provided for in the present invention, wherein an existing fastener having a hexagonal recess has been reworked to receive the bit of the present invention; and

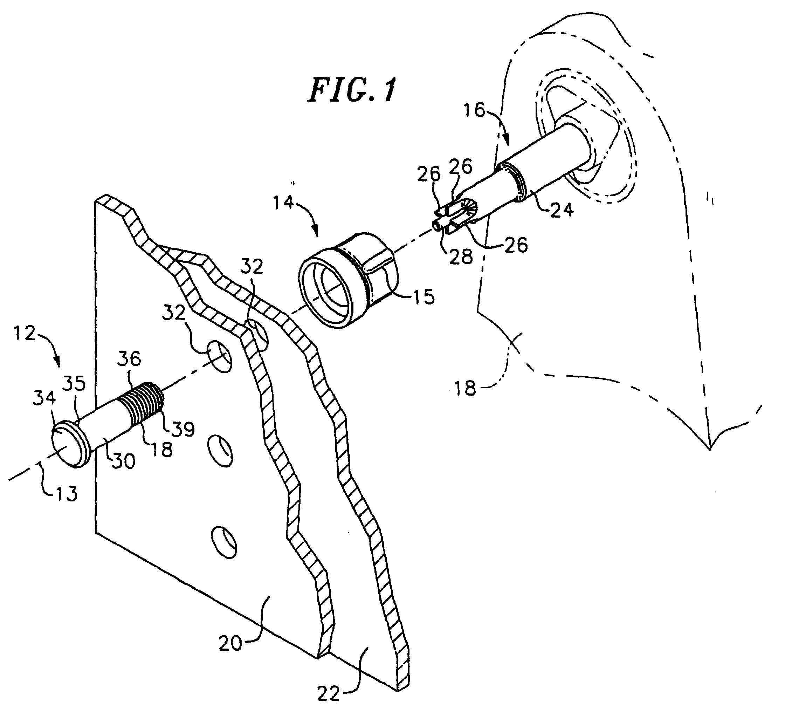

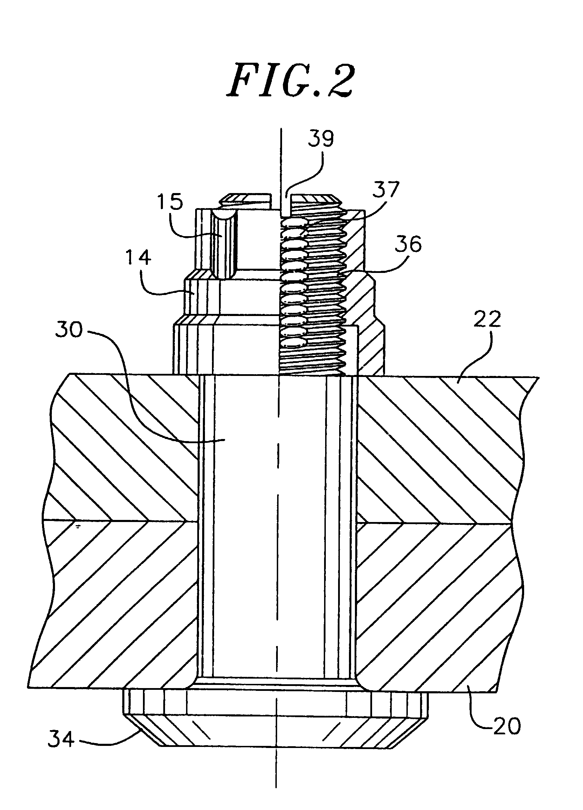

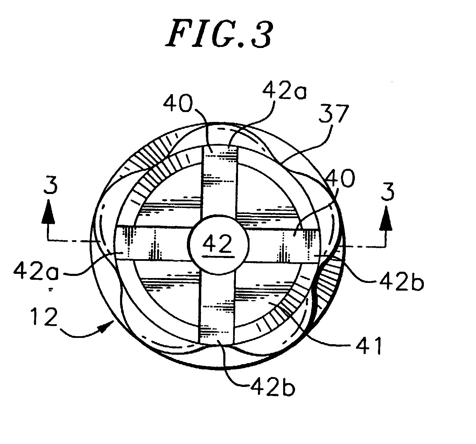

Referring now to FIG. 1, a presently preferred embodiment of the fastener system according to the present invention is generally illustrated. The fastener system includes a fastener, comprising a bolt or threaded pin 12 and a nut 14, and a bit 16. The pin 12 and nut 14 have a common axis 13. A pair of sheets 20, 22 comprising a workpiece are secured together by the fastener. The fastener secures the sheets together, forming a joint by compressive engagement between the nut 14 on one side of the workpiece, and a head 34 of the pin 12 on the opposite side, when the nut is torqued onto the pin. A cylindrical bore passes through the nut 14, and the inner surface (not shown) of the nut defining the bore is threaded. The nut 14 preferably has a plurality of external, axially extending lobes 15 integrally formed with the nut. The internal thread of the nut 14 is adapted to receive the threaded pin 12. The pin 12 has a head 34 and a threaded portion 36, opposite the head 34. The threaded portion 36 preferably includes a plurality of flutes 37 (FIG. 2) having a generally concave curvature extending across the threads of the pin 12 in the axial direction. An end face 41 (FIG. 3) of the threaded end 36 of the pin includes a recess 39 for receiving the bit 16 to prevent rotation of the pin as the nut is torqued onto the pin by a driver 18 (illustrated in phantom in FIG. 1). During the setting of the fastener illustrated in FIG. 1, the axial load applied between the bolt head and the nut increases up to a predetermined level. Once the predetermined axial load exists in the joint being made, the lobes 15 plastically deform into the flutes 37 of the pin to produce a mechanical thread lock.

The number of flutes provided on the pin relative to the number of lobes provided on the nut is preferably such that some of the material of at least one of the lobes can enter one of the flutes to effect the mechanical thread lock. In a presently preferred embodiment, five flutes are provided in the pin with three lobes provided on the nut.

The pin is illustrated in greater detail in FIGS. 2-4. Pin 12 includes a shank 30 that is received in aligned holes 32 in the workpiece. One end 36 of the shank is threaded for receiving the threads of the nut 14, and the other end of the shank has a head 34, which bears on an exposed surface of the workpiece to develop an axial load on the workpiece in cooperation with the nut. The head is arbitrarily illustrated without a wrenching surface, although other conventional pin heads may be used, such as hexagonal or countersunk heads.

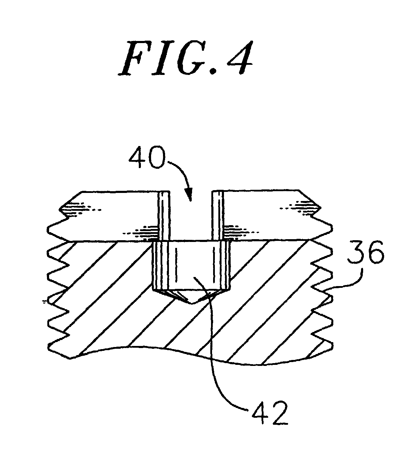

To prevent rotation of the pin 12, recess 39 is provided in the end face 41 of the threaded end 36 of the pin to receive the bit 16, which holds the pin stationary while the driver turns to torque the nut. In the embodiment illustrated in FIGS. 2-4, the recess 39 comprises a pair of slots 40 extending completely across the end face 41 of the threaded end 36 of the pin 12. As can be best seen from FIGS. 3 and 4, each slot extends across the end face 41 such that ends 42A, 42B of the slot open to the threaded end of the pin. The slots 40 intersect one another and are oriented substantially perpendicular to one another in the general shape of a cross. The recess 39 also includes a centering aperture 42, extending axially into the threaded end 36 of the pin and located at the intersection of the slots 40. In the embodiment illustrated in FIGS. 2-4, the centering aperture 42 is cylindrical in shape.

The slots may be formed in the pin by any suitable means, and are preferably milled or ground completely across the end face of the threaded end of the pin. It should be noted that one of the advantages of forming the slots completely across the end face of threaded portion of the pin is that the ends 42A, 42B of the slots provide additional void spaces in the threaded portion of the pin into which the lobe material can deform during setting of the fastener. More particularly, once the predetermined axial load exists in the joint being made and the lobes of the nut begin to plastically deform, some of the material positioned radially inward from the lobes may be displaced into the void spaces formed by the ends of the slots, in addition to being displaced into the flutes already present in the pin. Thus, the addition of the slots in the pin increases the backoff resistance or breakaway torque of the fastener, providing an improved mechanical lock between the nut and the pin.

Preferably, the recess 39 is contained entirely within the existing pin length of the fastener so that it is not necessary to add any material protruding from the end face 41 of the threaded end 36 of the pin to accommodate the cross-slot recess. Additionally, the depth of the recess is preferably such that a minimal amount of material will be removed from the lead-in or imperfect thread zone of the pin.

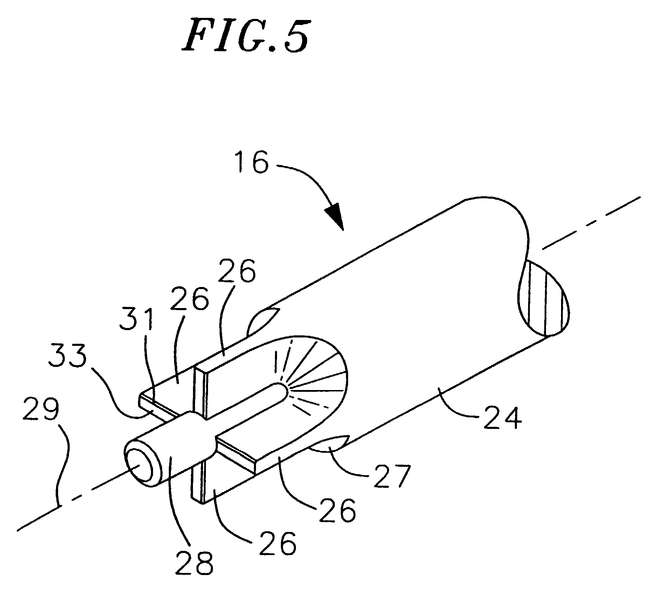

During setting of the fastener, the recess 39 receives and engages the cross-slot bit 16 to prevent rotation of the pin 12 as the nut 14 is torqued on by the driver 18. The bit 16 may be attached to a power tool for rapid installation of the fasteners, or may be used during hand installation of the fasteners. The cross-slot bit 16 is illustrated in detail in FIG. 5. The bit comprises a solid, cylindrical shaft 24 with a plurality of splines 26 extending from one end 27 of the shaft. In the embodiment illustrated in FIG. 5, four equally-spaced splines are located at the end of the shaft, parallel to the longitudinal axis 29 of the shaft. Each spline is substantially oriented perpendicular to all adjacent splines, forming the general shape of a cross at the end of the shaft. The outside diameter of the splines is preferably less than the minor thread diameter of the nut.

A pilot 28 protrudes from the end 27 of the shaft at the intersection of the splines 26. The pilot 28 consists of a cylinder having a smaller diameter than the shaft 24 and a common longitudinal axis with the shaft. The pilot 28 facilitates insertion of the bit 16 into the recess 39, by providing a mechanism for centering the bit along the end face 41 of the threaded end of the pin.

During setting of the fastener, the bit 16 acts as a torque reaction mechanism by preventing the pin 12 from rotating as the nut 14 is torqued on by the driver 18. More particularly, the pilot 28 of the cross-slot bit is received within the centering aperture 42, centering the bit on the end face 41 of the threaded end 36 of the pin. Additionally, the splines 26 of the cross-slot bit 16 are received within the matching cross-slots 40 of the recess 39. As the nut is torqued on by the driver, the matching configurations of the bit and the recess engage one another to prevent the pin from rotating.

In a presently preferred embodiment, the bit 16 includes beveled edges 31 on a leading edge 33 of the splines 26 to facilitate the insertion of the bit 16 into the recess 39. As a result of the relatively tight tolerances involved in most fastener systems, insertion of the bit into the recess may be difficult and thus, it may be advantageous to include beveled edges on the bit. Alternatively, beveled edges may be included on the cross-slots 40 of the recess 39 formed in the end face 41 of the threaded end of the pin.

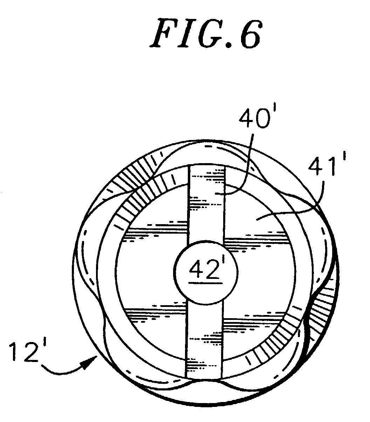

Referring now to FIG. 6, an alternate embodiment of the fastener system according to the present invention is illustrated. In the embodiment illustrated in FIG. 6, the recess comprises only a single slot 40' that has been ground or milled completely across the end face 41' of the threaded end of the pin 12'. Additionally, the recess includes a centering aperture 42' on the end face 41' of the threaded end of the pin, located substantially centrally along the slot 40'. For relatively smaller fasteners, there may be advantages to using a single-slot configuration, rather than the cross-slot configuration discussed above. For example, the use of a single slot may provide a more robust design due to the additional pin material remaining between adjacent slots, or ends of a slot. Additionally, the single slot configuration may permit the use of a wider slot.

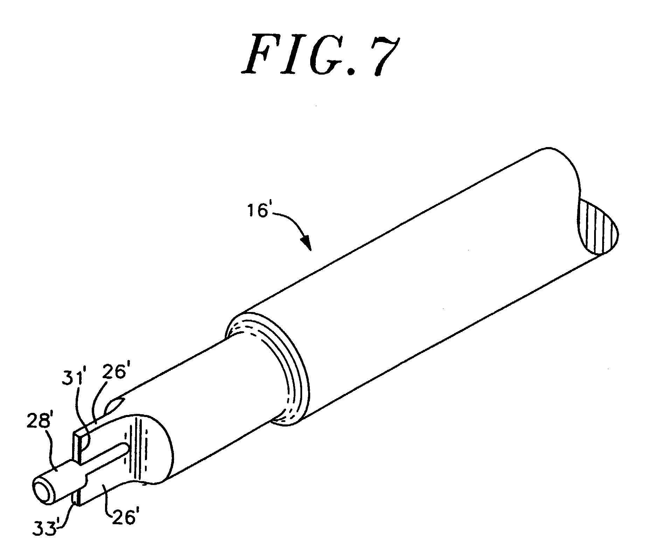

Referring now to FIG. 7, a single-slot bit 16' is illustrated for use with the single-slot recess illustrated in FIG. 6. The bit 16' comprises a pair of splines 26' and a pilot 28'. As with the previous embodiment, the bit 16' engages the single-slot recess in the pin 12' to prevent the pin from rotating during torquing of the nut. Additionally, as described above in connection with bit 16, beveled edges 31' may be included on a top surface 33' of each spline of bit 16'.

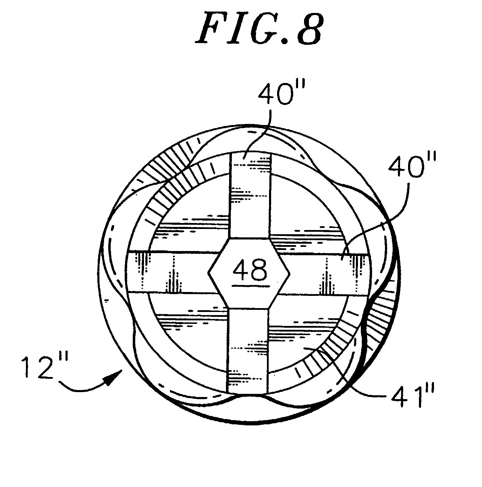

It should also be noted that another advantage of the present invention is that an existing inventory of fasteners may easily be reworked to exhibit the higher strength required for use in wet-sealant applications, thus allowing the cross-slot bit 16 to be used with the reworked existing fasteners. As indicated above, fasteners generally include a hexagonal recess 48 in the threaded end of the pin for receiving a hexagonal bit. Referring now FIG. 8, in another embodiment of the present invention, a pair of cross-slots 40" are milled or ground completely across the end face 41" of the threaded end of a pin 12'', adjacent the existing hexagonal recess 48 in the pin. The existing hexagonal recess 48 functions as the centering aperture for guiding the cross-slot bit 16 during setting of the fastener. Therefore, during installation of the fastener, the pilot 28 of the cross-slot bit 16 is received within the hexagonal recess 48, while the splines 26 of the cross-slot bit 16 engage the cross-slots 40'' formed in the end face of the threaded end of the pin. Although shown in a particular orientation in FIG. 8, the cross-slots 40" do not need to be aligned in any particular orientation with respect to the hexagonal recess 48.

Various modifications and variations of the invention described herein will be apparent to those skilled in the art. For example, a number of different configurations may be substituted for the cross-slot configuration of the recess and bit. It may be preferable to orient the slots such that they substantially resemble an "X" rather than a cross. Likewise, more than two slots may be used and oriented such that they substantially resemble a "Y". It should be noted that for such configurations, it may be necessary to orient the splines on the bit to mirror the configuration of the recess as needed. For such reasons, it will be understood that, within the scope of the appended claims, the invention may be practiced otherwise than as specifically described.

## Claims

1. A fastener comprising:
a nut; and
a pin having a shank, a threaded portion on the shank, an end face on the threaded portion of the shank, and a recess in the end face,
wherein the recess comprises a plurality of slots, extending completely across the end face, and an aperture, and
wherein the nut is adapted to be torqued onto the pin.

2. A fastener according to Claim 1, characterised in that the plurality of slots comprises a pair of intersecting slots.

3. A fastener according to Claim 1 or Claim 2, characterised in that the nut comprises at least one external, axially extending lobe.

4. A fastener according to any one of Claims 1 to 3, characterised in that the slots are oriented substantially perpendicular to one another.

5. A fastener according to Claim 2, characterised in that the aperture is located at an intersection of the slots.

6. A fastener comprising:
a nut having at least one external axially extending lobe; and
a pin having a shank, a threaded portion on the shank, an end face on the threaded portion of the shank, and a recess in the end face,
wherein the recess comprises a slot, extending completely across the end face, and an aperture, and
wherein the nut is adapted to be torqued onto the pin.

7. A fastener according to Claim 6, characterised in that the aperture is substantially centrally located in the slot.

8. A bit for use in a fastener system, the bit comprising:
a shaft;
a plurality of splines extending from an end of the shaft; and
a pilot extending from the splines on the end of the shaft.

9. A bit according to Claim 8, characterised in that the plurality of splines comprises four intersecting splines extending from the end of the shaft.

10. A bit according to Claim 8 or Claim 9, characterised in that the plurality of splines comprises a pair of splines, each spline on an opposite side of the end of the shaft.

11. A bit according to any one of Claims 8 to 10, characterised in that the pilot is cylindrical.

12. A bit according to Claim 9, characterised in that the pilot is located at an intersection of the splines.

13. A bit according to Claim 9 or to Claim 12, characterised in that the intersecting splines are oriented to substantially form a cross on the end of the shaft.

14. A fastener system arranged to exhibit increased strength during installation of a fastener, the fastener system comprising:
a bit including a shaft, a plurality of splines extending from an end of the shaft, and a pilot extending from the splines;
a nut having at least one external, axially extending lobe; and
a pin having a shank, a threaded portion on the shank, an end face on the threaded portion of the shank, and a recess in the end face,
wherein the recess comprises a plurality of slots and an aperture, and
wherein the recess is configured to receive the splines and pilot of the bit when the nut is torqued onto the pin.

15. A system according to Claim 14, characterised in that at least one of the plurality of slots extends completely across the end face.

16. A system according to Claim 14 or Claim 15, characterised in that the pin further comprises a plurality of flutes extending in an axial 61° direction across the threaded portion of the pin.

17. A system according to any one of Claims 14 to 16, characterised in that the plurality of slots comprises a pair of substantially perpendicular intersecting slots, wherein the aperture is located at an intersection of the slots, and wherein the splines and pilot of the bit are oriented in a mating configuration with the recess.

18. A fastener system particularly adapted to exhibit increased strength during installation, the fastener system comprising:
a bit including a shaft, a pair of splines extending from an end of the shaft, and a pilot extending from the splines;
a nut having at least one external, axially extending lobe; and
a pin including a shank, a threaded portion on the shank, an end face on the threaded portion of the shank, and a recess in the end face,
wherein the recess comprises a slot and an aperture, and
wherein the recess is configured to receive the splines and pilot of the bit when the nut is torqued onto the pin.

19. A fastener system according to Claim 14 or Claim 18, characterised in that at least one of said plurality of slots extends completely across the end face.

20. A fastener, system or bit according to any preceding claim, characterised in that the aperture is cylindrical.

21. A fastener, system or bit according to any one of Claims 1 to 20, characterised in that the aperture is hexagonal.

22. A fastener, system or bit according to any one of Claims 8 to 19 characterised in that at least one of the splines further comprises a top surface having a bevelled edge.
